# EUROPEAN PATENT SPECIFICATION

(11) **EP 4 623 423 B1**
(45) Date of publication and mention of the grant of the patent: **02.09.2026**
(21) Application number: 23805572.7
(22) Date of filing: 13.11.2023
(51) Int. Cl.: G06V 10/25, G06V 10/44, G06V 10/46, G06V 10/772, G06V 10/776, G06V 10/82, G06F 18/2132, G06F 18/21, G06F 18/28, G06T 7/00

(54) **SALIENCY MAPS FOR DEEP LEARNING MODELS**
SALIENZKARTEN FÜR TIEFENLERNMODELLE
CARTES DE RELIEF POUR MODÈLES D'APPRENTISSAGE PROFOND

(30) Priority: 21.11.2022 US 202263427048 P; 08.12.2022 EP 22212190
(43) Date of publication of application: 01.10.2025
(73) Proprietor: Koninklijke Philips N.V., 5656 AE Eindhoven (NL)
(72) Inventor: WEHLE, Simon, 5656 AG Eindhoven (NL); GOOSSEN, André, 5656 AG Eindhoven (NL); LOSSAU, Tanja, 5656 AG Eindhoven (NL); GESSERT, Nils Thorben, 5656 AG Eindhoven (NL); PETERS, Jochen, 5656 AG Eindhoven (NL); WAECHTER-STEHLE, Irina, 5656 AG Eindhoven (NL); WEBER, Frank Michael, 5656 AG Eindhoven (NL); PRATER, David, 5656 AG Eindhoven (NL)
(74) Representative: Philips Intellectual Property & Standards
(86) International application number: PCT/EP2023/081544
(87) International publication number: WO 2024/110224

(56) References cited:
- AMIT DHURANDHAR ET AL: "Explanations based on the Missing: Towards Contrastive Explanations with Pertinent Negatives", ARXIV.ORG, CORNELL UNIVERSITY LIBRARY, 201 OLIN LIBRARY CORNELL UNIVERSITY ITHACA, NY 14853, 21 February 2018 (2018-02-21), XP081134473
- WANG PEI ET AL: "SCOUT: Self-Aware Discriminant Counterfactual Explanations", 2020 IEEE/CVF CONFERENCE ON COMPUTER VISION AND PATTERN RECOGNITION (CVPR), IEEE, 13 June 2020 (2020-06-13), pages 8978 - 8987, XP033805560, DOI: 10.1109/CVPR42600.2020.00900
- SHIMODA WATARU ET AL: "Distinct Class-Specific Saliency Maps for Weakly Supervised Semantic Segmentation", 17 September 2016, SAT 2015 18TH INTERNATIONAL CONFERENCE, AUSTIN, TX, USA, SEPTEMBER 24-27, 2015; [LECTURE NOTES IN COMPUTER SCIENCE; LECT.NOTES COMPUTER], SPRINGER, BERLIN, HEIDELBERG, PAGE(S) 218 - 234, ISBN: 978-3-540-74549-5, XP047355391
- PRABHUSHANKAR MOHIT ET AL: "Contrastive Explanations In Neural Networks", 2020 IEEE INTERNATIONAL CONFERENCE ON IMAGE PROCESSING (ICIP), IEEE, 25 October 2020 (2020-10-25), pages 3289 - 3293, XP033869390, DOI: 10.1109/ICIP40778.2020.9190927

## Description

### FIELD OF THE INVENTION

The invention relates to the field of deep learning models. In particular, the invention relates to the field of saliency maps obtained from deep learning models.

### BACKGROUND OF THE INVENTION

Large, deep learning models are often considered to be black boxes. This can be dangerous, especially when used in medical contexts. In particular, when there is a limited amount of data to train the deep learning models, or there exists a bias in the data that is not obvious, there is a significant risk of the trained model being overfitted to some specifics or incidental properties of the data.

Saliency methods such as Guided Backpropagation or Class Activation Maps (CAMs) have been proposed to visualize results of deep learning models beyond the pure classification output. Saliency maps achieve this by highlighting regions within the input data that contributed most to the final network output of the network.

For example, a saliency map can be obtained by looking at the output of the last convolutional layer in the deep learning model corresponding to the classification of choice. The convolutional layer may comprise a plurality of maps which can be combined (e.g., weighted combination) to generate the saliency map. The saliency map is typically used when overlayed on the input image as it shows which regions of the image the deep learning model was focusing on, when determining the classification for the image.

When asking experts to annotate images, particularly for soft features such as quality or suitability for a specific diagnostic task, saliency maps can show visual clues for the decision of the deep learning model. For example, saliency maps perform well when using simple categories like "good/bad" (e.g., binary classifications).

For problems with many classes or continuous scales, there are no ad hoc methods for generating saliency maps. Thus, there is a need for an improved method for providing saliency maps. A method for generating meaningful saliency maps in non-binary classifications and regressions is not intuitive and described for a medical use case therein.

Zhang Jing et. al. "Explainability for Regression CNN in Fetal Head Circumference Estimation from Ultrasound Images", ECCV 2020 discloses measuring head circumference is ultrasound images using saliency maps.

US 2021/0174497 A1 discloses a method generating improved saliency maps using feature maps. DHURANDHAR ET AL, 2018: "Explanations based on the Missing: Towards Contrastive Explanations with Pertinent Negatives", 2018; PEI ET AL, 2020: "SCOUT: Self-Aware Discriminant Counterfactual Explanations" and WATARU ET AL, 2016: "Distinct Class-Specific Saliency Maps for Weakly Supervised Semantic Segmentation" teach the use of contrastive/ counterfactual visual explanations in the context of deep learning-based discrete classification and semantic segmentation.

### SUMMARY OF THE INVENTION

The invention is defined by the claims.

According to examples in accordance with an aspect of the invention, there is provided a method for providing saliency maps for a deep learning model, the method comprising:
inputting an input image into the deep learning model trained to output a metric score, from a plurality of metric scores, for the input image;
generating a supportive saliency map for the input image, from the deep learning model, corresponding to a first range of the metric scores for the image, thereby providing one or more supportive regions of the image indicative of the first range of metric scores; and
generating a distractive saliency map for the image, from the deep learning model, corresponding to a second, different, range of the metric scores for the image, thereby providing one or more distractive regions of the image indicative of the second range of metric scores.

The first and second ranges are different in that they do not cover identical ranges of possible metric scores output by the deep learning model. In an embodiment, the first and second ranges do not overlap.

The supportive regions and distractive regions provide information on the relative importance of the regions for the deep learning algorithm when calculating the output metric score. In particular, the supportive regions (indicative of the first range of metrics) indicate the regions of the image which led to the determination of a particular metric score for the image whereas the distractive regions (indicative of the second range of metrics) indicate regions which led the deep learning model away from the particular metric score output.

When provided with context of the nature of the metric score, this can help the user determine the suitability of the image. For example, when the metric score is a quality score indicative of the quality of the image, the supportive regions may indicate portions of the image which are of high quality and the distractive regions may indicate portions which are of low quality.

In essence, the supportive and distractive regions serve as an explanation of how the deep learning model determined the metric score, where the explanation is not based on clear rules but, instead, is based on displaying the regions. Such explanations can increase trust in the deep learning model as it does not just output the metric score but also provides an explanation of how it got there.

The metric scores generally relate to non-measurable and/or subjective gradings which cannot simply be measured and/or may depend on who/what is providing the metric score.

The deep learning model is a regression model.

Alternatively, in some examples not within the scope of the claims, the deep learning model may be a classification model.

The supportive saliency map may be generated by applying weights to the metric scores in the first range relative to their distance from a supportive value contained within the first range, and the distractive saliency map may be generated by applying weights to the metric scores in the second range relative to their distance from a distractive value contained within the second range.

When trying to visualize a neural network's decision, a singular saliency map has been used in the past. However, especially in this case of image quality grading, it is unclear how to generate these maps as image quality assessment is often formulated as a regression task (i.e., predicting continuous outputs or grading scales). There is no conventional saliency for regression tasks and has not been clear how to extend saliency map generation for regression tasks in image quality grading. Thus, the invention also provides an extension of saliency maps for regression by internally redefining the problem to several classification problems.

The metric score may be a quality score.

The method may further comprise separately processing the image at the position of the supportive regions and/or the distractive regions.

For example, the supportive regions may correspond to high quality regions and the distractive regions may correspond to low quality images. Thus, the low quality regions can be processed to increase the quality (e.g. adapt contrast, sharpness etc.) such that the overall quality of the image increases without affecting the (already high) quality of the supportive regions.

The method may further comprise switching from a first image processing scheme to a second image processing scheme, for processing the image, in response to the metric score output by the deep learning model falling below, or exceeding, a score threshold.

The method may further comprise re-training or tuning the deep learning model with user-specific images and user-provided metric scores for the user-specific images.

This can enable one to visualize and understand, via the saliency maps, the user's decisions when annotating the images.

The method may further comprise displaying the supportive saliency map and the distractive saliency map overlayed on the image.

The invention also provides a computer program carrier comprising computer program code which, when executed on a processing system, causes the processing system to perform all of the steps of the afore-mentioned method.

For example, the computer program carrier may be a relatively long-term data storage solution (e.g., hard drives, solid state drives etc.) or a relatively temporary data storage solution such as a bitstream.

The invention also provides a system for providing saliency maps for a deep learning model, the system comprising a processor configured to:
input an input image into the deep learning model trained to output a metric score, from a plurality of metric scores, for the input image;
generate a supportive saliency map for the input image, from the deep learning model, corresponding to a first range of the metric scores for the image, thereby providing one or more supportive regions of the image indicative of the first range of metric scores; and
generate a distractive saliency map for the image, from the deep learning model, corresponding to a second, different, range of the metric scores for the image, thereby providing one or more distractive regions of the image indicative of the second range of metric scores.

The deep learning model is a regression model.

The processor is configured to generate the supportive saliency map by applying weights to the metric scores in the first range relative to their distance from a supportive value contained within the first range, and the processor is configured to generate the distractive saliency map by applying weights to the metric scores in the second range relative to their distance from a distractive value contained within the second range.

The metric score may be a quality score.

The processor may be further configured to separately process the image at the position of the supportive regions and/or the distractive regions.

The processor may be further configured to re-train or tune the deep learning model with user-specific images and user-provided metric scores for the user-specific images.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Fig. 1 shows two cardiac ultrasound images overlaid with supportive regions and distractive regions for image quality;
Fig. 2 shows a flow chart for obtaining the supportive saliency map and the distractive saliency map; and
Fig. 3 shows abdominal computed tomography (CT) scans.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a method and system for providing saliency maps for a deep learning model. The method comprises inputting an input image into the deep learning model trained to output a metric score, from a plurality of metric scores, for the input image. A supportive saliency map is generated for the input image, from the deep learning model, corresponding to a first range of the metric scores for the image, thereby providing one or more supportive regions of the image indicative of the first range of metric scores. A distractive saliency map is also generated for the image, from the deep learning model, corresponding to a second range of the metric scores for the image, thereby providing one or more distractive regions of the image indicative of the second range of metric scores.

Currently, understandable artificial intelligence (AI) is a growing field, especially in medical applications. For example, further automation is being sought for ultrasound exams. In this context, it is desirable to detect whether an ultrasound image is suited for a higher-level automatic assessment such as expansion, volumetry, strain, or other measurements. Automatic assessments are currently fed with ultrasound images approved by the user.

An advantage of using supportive and distractive saliency maps is that they can help solve a common problem of neural networks; they are perceived as black boxes. In particular, neural networks are often perceived as black boxes when modelling human annotations that rely on knowledge and experience for a specific task. Both saliency maps serve as an explanation metric for the scoring, from the neural network (or other AI/deep learning solutions) that is not drawn from clear rules but, instead, shows fuzzy patterns and appearances of features within an image.

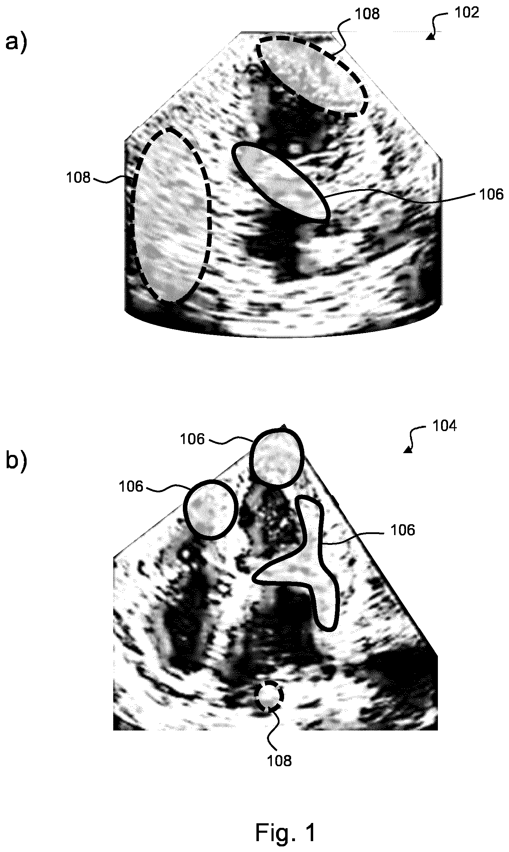

Fig. 1 shows two cardiac ultrasound images overlaid with supportive regions 106 and distractive regions 108 for image quality. Fig. 1 a) shows a relatively low quality ultrasound cardiac image 102. The ultrasound image 102 was input into a deep learning model trained to output an image quality score for the image 102. Further, two saliency maps for the image 102 were obtained from the deep learning model.

The first saliency map is a supportive saliency map which shows supportive regions 106 of the image 102 which the deep learning model uses to support a high quality score. In other words, the supportive regions show areas of the image which the deep learning model believes are high quality. As can be seen, the only supportive region in image 102 is a small section of a wall.

The second saliency map is a distractive map which shows distractive regions 108 of the image 102 which lead the deep learning model away from a high quality score. In other words, the distractive regions show areas of the image which the deep learning model believes are low quality. In this case, it seems that the deep learning model used the wall near the apex of the image 102 and the strong speckle noise towards the left of the image 102 (shown in distractive regions 108) to determine a relatively low quality rating/score for the image.

In contrast, Fig. 1 b) shows a relatively high quality ultrasound image 104. Image 104 has well-contrasted borders with good lateral wall visibility, as shown by the supportive regions 106, and a single, fairly small, distractive region 108. These regions likely drove a relatively high image quality score for the image 104.

Thus, in the case of image quality, the supportive regions 106 of a supportive saliency map and the distractive regions 108 of the distractive saliency map provide more detailed information on the quality of the images 102 and 104 compared to a single quality score obtained from the deep learning score.

Solutions discussed herein provide a visual regions (i.e. regions 106 and 108), which can be overlaid on the images 102 and 104, from the existing "global" labels, such as good image quality or bad image quality. Thus, deep learning models, after extracting identifiable outside metrics by learning, can provide supportive and distractive regions for visualizing which parts of the images drive the model's decision, giving both insights into regions of the input image which support and oppose the output label. For example, if the basis of the labels was not known, one could infer by the regions 106 and 108 that "good" and "bad" labels mostly refer to the visibility of the myocardium in this case.

Additionally, it is possible for the deep learning model to receive user feedback as to why, and where, a certain metric was met or not met.

Two desirable use cases have been identified. The first use case involves understanding expert decisions and being able to visualize them on data for the sake of internal improvement of methods and parameters. The second use case is providing (clinical) users an explanation of certain metrics on their data by visualizing the reasoning and thus driving trust in the deep learning model with respect to the specific task.

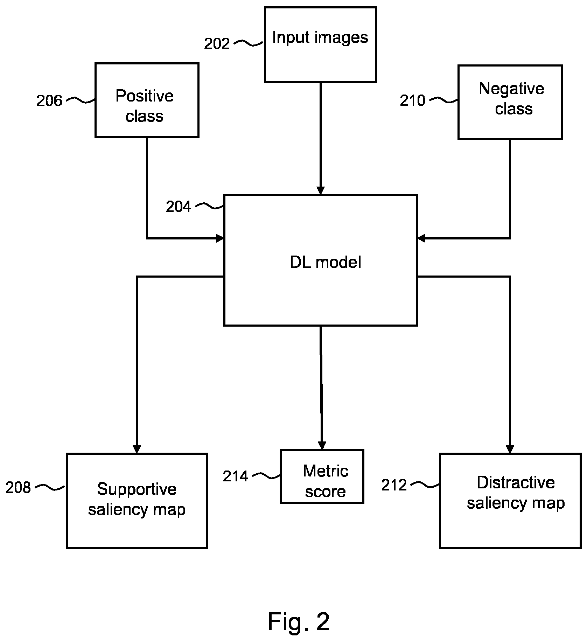

Fig. 2 shows a flow chart for obtaining the supportive saliency map 208 and the distractive saliency map 212.

Initially, a classification or regression problem is formulated for the deep learning model 204. For this purpose, the input images 202 must be related to the target. The target can be a discrete label (classification) or a label representing a continuous grading (regression). In the latter case, the continuous label is transformed into a classification problem by defining label ranges of supportive and distractive class. In the case of a regression target, or multi-class classification problem, in-between labels can be weighted according to their distance of the most supportive (or distractive) class.

The labels and image relations are learned by an appropriate deep learning model 204, such as a convolutional neural network (CNN). In case of a regression target, this can also be done in a multi-target learning fashion, where one prediction branch of the network is used for regression of the original scale and a second branch is used for classifying the supportive and distractive classes. The parameters of this model 204 should be chosen in a way to accommodate the complexity of the problem.

The trained model 204 can then be used to compute saliency maps 208 and 212, such as Class Activation Maps (CAM), for supportive and distractive classes per input 202. In the post-processing step, the supportive and distractive regions in the supportive map 208 and distractive map 212 respectively can be used to identify features in the input image 202 that lead to agreement (or disagreement) with the predicted class for the input image 202 as shown in Fig. 1.

The deep learning model 204 may be able to process external labels. For example, the external labels may be a quality score or a different, non-measurable, technical quantity such as noise level, degree of distortion etc. typically rated/annotated by a human observer. The external labels may also be one of a level blurring, the presence/absence of a feature, the clarity of an image etc.

The model 204 is trained to reproduce the external labels by outputting a corresponding metric score 214 via a regression task or classification task.

The main task (i.e., outputting the metric scores) can be divided into two extreme binary classification categories weighted by the labels distance to the extremes (e.g., very good, very bad quality).

A first saliency map 208 is generated. The first saliency map 208 derives regions within the input image 202 that support a first range 206 of metric scores and produces a first set of (supportive) output regions.

A second saliency map 212 is also generated. The second saliency map 212 derives regions within the input image 202 that support a second range 210 of metric scores and produces a second set of (distractive) output regions.

Saliency maps may comprise output regions of the input image 202 which support the external label in both a supportive, distractive or neutral manner. This can lead to four saliency indicators: positive saliency for a positive class (or range of classes) 206, negative saliency for the positive class (or range of classes) 206, positive saliency for a negative class (or range of classes) 210 and negative saliency for the negative class (or range of classes) 210. The supportive regions may be regions of the supportive saliency map corresponding to the positive saliency indictors for the positive class 206 and the distractive regions may be regions of the distractive saliency map corresponding to the positive saliency indicators for the negative class 210.

Thus, the supportive and distractive regions can be visualized/rendered on the input image 202 or a schematic depiction thereof. Optionally, or alternatively, a post-processing adaptation step could be used to drive image enhancement on the detected supportive and/or distractive regions.

It is noted that the regions shown will generally not be displayed as binary selections. Instead, for each pixel, a probability or an intensity map for the image will likely be shown for each image. For example, the brightness/color of each pixel in the regions may depend on the probability/corresponding value in the intensity map.

For example, when the metric score 214 is image quality, contrast enhancement can be applied to low quality regions of an image and/or an algorithm may be used to zoom into good quality regions and/or crop bad quality regions.

The output quality score could also be used to determine a threshold for switching between different post-processing schemes. For example, if the image quality drops below a certain threshold, a post-processing scheme could be used that ensures a minimal quality in all image regions.

As discussed, metric scores other than image quality can also be used to derive visual explanations using the supportive and distractive regions. For example, the metric score may be an indication of whether a measurement could be done using the input image 202. Thus, the supportive regions could indicate regions of the input image 202 that indicate a measurement will be successful and the distractive regions could indicate regions that indicate a measurement will not be successful.

Thus, the saliency maps can be used to detect if an external measurement will be successful and identify regions in the input image 202 that might lead to failure. This could be a live feature during image capture.

A user could also classify their own data in a simple scheme (e.g., like/dislike) and the deep learning model 204 can be re-trained based on the user-specific classifications. In a first step, this could be used to visualize features on the data supporting the grading of a newly acquired image.

Furthermore, even without showing the supportive/distractive regions to the user, they could be used to apply image quality improvements based on the preferences of the users. As the deep learning model 204 learnt to identify regions that made the user dislike the image, those regions can be specifically processed to better match the user's likes/dislikes. As the classifications follow a simple scheme (e.g., like/dislike), they are easy to generate for the user.

In highly mobile applications (e.g., only having a tablet or smartphone as interface without a lot of control buttons), classifications could be done in a simple scheme like thumbs up/thumbs down or swipe left/right and allow users to customize the image enhancement algorithms based on their preferences.

The metric score 214 can also be provided to the user. This can be achieved by a second quality score regression/classification head parallel to the saliency-classification head in the deep learning model 204.

It will be appreciated that the method could also be applied to segmentation or landmark detection problems. Similarly, the method can be applied to modalities other than ultrasound imaging and can be applied to many scenarios.

For example, the method can prove helpful when analyzing expert annotations of medical images or understanding visually the implications/effects of certain metrics in images.

For users, this method can provide visual representations of deep learning models on the system. An example would be a guidance toward successful measurements by indicating regions of insufficient image quality during an exam.

Furthermore, this method can also be integrated in other workflows, such as automatic processing steps based on an agreement with a certain label or by automatically selecting best matching input images for other measurements.

In a standard setup, the deep learning model is typically pre-trained and then only applied to the acquired images. In an extended setup, it would also be possible to re-train or fine-tune the deep learning model on the system. Especially, a user could rate their own images in terms of perceived image quality (or some other non-measurable metric score). After re-training, the model would then identify those image regions that have a positive influence on the user perception, and image regions that have a negative influence on user perception. Then, the image regions that have a negative influence could be post-processed with increased attention and/or effort to better match the image quality to the individual user's expectation.

It will be appreciated that for many non-measurable/subjective metric scores (e.g., quality), how an image is post-processed will often depend on the preferences of the user. Thus, by re-training the deep learning model with the preferences of the user, effective, personalized and automatic post-processing can be realized for different users.

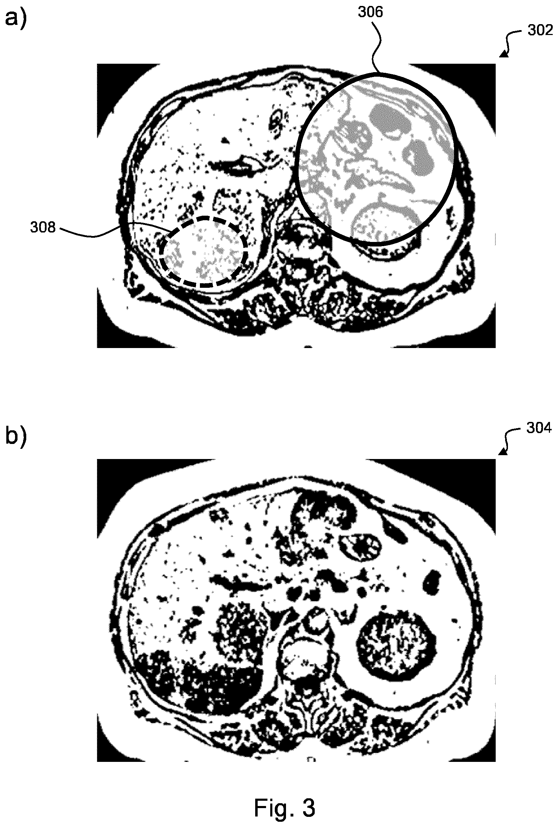

Fig. 3 shows abdominal computed tomography (CT) scans 302 and 304. Fig. 3 a) shows a first CT image 302 input into a trained deep learning model to determine quality (or some other subjective metric score). In this example, supportive region 306 has been identified as "high quality" and distractive region 308 has been identified as "low quality". Thus, for the next CT image 304 shown in Fig. 3 b), the CT scan parameters may be adapted, or the images may be post-processed, such that the regions in the next CT image 304, corresponding to the distractive regions 308 of the previous CT image 302, have improved quality. Of course, the previous CT image 302 can also be post-processed to improve the quality of the distractive region 308 whilst keeping the (already high) quality of supportive region 306.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality.

Functions implemented by a processor may be implemented by a single processor or by multiple separate processing units which may together be considered to constitute a "processor". Such processing units may in some cases be remote from each other and communicate with each other in a wired or wireless manner.

The mere fact that certain measures are recited in mutually different dependent claims does not indicate that a combination of these measures cannot be used to advantage.

A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa.

Any reference signs in the claims should not be construed as limiting the scope.

## Claims

1. A method for providing saliency maps for a deep learning model (204), wherein the deep learning model is a regression model, the method comprising:
inputting an input image (202) into the deep learning model trained to output a metric score (214), from a plurality of metric scores, for the input image;
generating a supportive saliency map (208) for the input image, from the deep learning model, corresponding to a first range of the metric scores for the image, thereby providing one or more supportive regions (106) of the image indicative of the first range of metric scores; and
generating a distractive saliency map (212) for the image, from the deep learning model, corresponding to a second, different, range of the metric scores for the image, thereby providing one or more distractive regions (108) of the image indicative of the second range of metric scores,
wherein the supportive saliency map is generated by applying weights to the metric scores in the first range relative to their distance from a supportive value contained within the first range, and the distractive saliency map is generated by applying weights to the metric scores in the second range relative to their distance from a distractive value contained within the second range.

2. The method of claim 1, wherein the metric score is a quality score.

3. The method of claim 1 or 2, further comprising separately processing the image at the position of the supportive regions and/or the distractive regions.

4. The method of any of claims 1 to 3, further comprising switching from a first image processing scheme to a second image processing scheme, for processing the image, in response to the metric score output by the deep learning model falling below, or exceeding, a score threshold.

5. The method of any one of claims 1 to 4, further comprising re-training the deep learning model with user-specific images and user-provided metric scores for the user-specific images.

6. The method of any one of claims 1 to 5, further comprising displaying the supportive saliency map and the distractive saliency map overlayed on the image.

7. A computer program carrier comprising computer program code which, when executed on a processing system, causes the processing system to perform all of the steps of the method according to any of the preceding claims.

8. A system for providing saliency maps for a deep learning model (204), wherein the deep learning model is a regression model, the system comprising a processor configured to:
input an input image (202) into the deep learning model trained to output a metric score (214), from a plurality of metric scores, for the input image;
generate a supportive saliency map (208) for the input image, from the deep learning model, corresponding to a first range of the metric scores for the image, thereby providing one or more supportive regions (106) of the image indicative of the first range of metric scores; and
generate a distractive saliency map (212) for the image, from the deep learning model, corresponding to a second, different, range of the metric scores for the image, thereby providing one or more distractive regions (108) of the image indicative of the second range of metric scores
wherein the processor is further configured to generate the supportive saliency map by applying weights to the metric scores in the first range relative to their distance from a supportive value contained within the first range, and to generate the distractive saliency map by applying weights to the metric scores in the second range relative to their distance from a distractive value contained within the second range.

9. The system of claim 8, wherein the metric score is a quality score.

10. The system of claim 8 or 9, wherein the processor is further configured to separately process the image at the position of the supportive regions and/or the distractive regions.

11. The system of any of claims 8 to 10, wherein the processor is further configured to re-train the deep learning model with user-specific images and user-provided metric scores for the user-specific images.

## Patentansprüche

1. Verfahren zum Bereitstellen von Salienzkarten für ein Deep-Learning-Modell (204), wobei es sich bei dem Deep-Learning-Modell um ein Regressionsmodell handelt, wobei das Verfahren Folgendes umfasst:
Eingeben eines Eingabebildes (202) in das Deep-Learning-Modell, das darauf trainiert wurde, aus einer Vielzahl von Metrikwerten einen Metrikwert (214) für das Eingabebild auszugeben;
Erzeugen einer unterstützenden Salienzkarte (208) für das Eingabebild aus dem Deep-Learning-Modell, die einem ersten Bereich der Metrikwerte für das Bild entspricht und dadurch Bereitstellen eines oder mehrerer unterstützenden Bereiche (106) des Bildes, die den ersten Bereich der Metrikwerte angeben; und
Erzeugen einer ablenkenden Salienzkarte (212) für das Bild aus dem Deep-Learning-Modell, die einem zweiten, unterschiedlichen Bereich der Metrikwerte für das Bild entspricht und dadurch Bereitstellen eines oder mehrerer ablenkenden Bereiche (108) des Bildes, die den zweiten Bereich der Metrikwerte angeben,
wobei die unterstützende Salienzkarte durch Gewichtung der Metrikwerte im ersten Bereich relativ zu ihrem Abstand von einem innerhalb des ersten Bereichs enthaltenen unterstützenden Wert erzeugt wird und die ablenkende Salienzkarte durch Gewichtung der Metrikwerte im zweiten Bereich relativ zu ihrem Abstand von einem innerhalb des zweiten Bereichs enthaltenen ablenkenden Wert erzeugt wird.

2. Verfahren nach Anspruch 1, wobei es sich bei dem Metrikwert um einen Qualitätswert handelt.

3. Verfahren nach Anspruch 1 oder 2, ferner umfassend das separate Verarbeiten des Bildes an der Position der unterstützenden Bereiche und/oder der ablenkenden Bereiche.

4. Verfahren nach einem der Ansprüche 1 bis 3, ferner umfassend das Umschalten von einem ersten Bildverarbeitungsschema auf ein zweites Bildverarbeitungsschema zur Verarbeitung des Bildes als Reaktion darauf, dass der vom Deep-Learning-Modell ausgegebene Metrikwert unter einen Schwellenwert fällt oder einen Schwellenwert überschreitet.

5. Verfahren nach einem der Ansprüche 1 bis 4, ferner umfassend das erneute Trainieren des Deep-Learning-Modells mit benutzerspezifischen Bildern und vom Benutzer bereitgestellten Metrikwerten für die benutzerspezifischen Bilder.

6. Verfahren nach einem der Ansprüche 1 bis 5, ferner umfassend das Anzeigen der unterstützenden Salienzkarte und der ablenkenden Salienzkarte, die über das Bild gelegt sind.

7. Computerprogrammträger, der Computerprogrammcode umfasst, der, wenn er auf einem Verarbeitungssystem ausgeführt wird, bewirkt, dass das Verarbeitungssystem alle Schritte des Verfahrens nach einem der vorstehenden Ansprüche durchführt.

8. System zum Bereitstellen von Salienzkarten für ein Deep-Learning-Modell (204), wobei es sich bei dem Deep-Learning-Modell um ein Regressionsmodell handelt, wobei das System einen Prozessor umfasst, der konfiguriert ist, zum:
Eingeben eines Eingabebildes (202) in das Deep-Learning-Modell, das darauf trainiert wurde, aus einer Vielzahl von Metrikwerten einen Metrikwert (214) für das Eingabebild auszugeben;
Erzeugen einer unterstützenden Salienzkarte (208) für das Eingabebild aus dem Deep-Learning-Modell, die einem ersten Bereich der Metrikwerte für das Bild entspricht und dadurch Bereitstellen eines oder mehrerer unterstützenden Bereiche (106) des Bildes, die den ersten Bereich der Metrikwerte angeben; und
Erzeugen einer ablenkenden Salienzkarte (212) für das Bild aus dem Deep-Learning-Modell, die einem zweiten, unterschiedlichen Bereich der Metrikwerte für das Bild entspricht und dadurch Bereitstellen eines oder mehrerer ablenkenden Bereiche (108) des Bildes, die den zweiten Bereich der Metrikwerte angeben,
wobei der Prozessor ferner so konfiguriert ist, dass er die unterstützende Salienzkarte erzeugt, durch Gewichtung der Metrikwerte im ersten Bereich relativ zu ihrem Abstand von einem innerhalb des ersten Bereichs enthaltenen unterstützenden Wert und die ablenkende Salienzkarte erzeugt, durch Gewichtung der Metrikwerte im zweiten Bereich relativ zu ihrem Abstand von einem innerhalb des zweiten Bereichs enthaltenen ablenkenden Wert.

9. System nach Anspruch 8, wobei es sich bei dem Metrikwert um einen Qualitätswert handelt.

10. System nach Anspruch 8 oder 9, wobei der Prozessor ferner so konfiguriert ist, dass er das Bild an der Position der unterstützenden Bereiche und/oder der ablenkenden Bereiche separat verarbeitet.

11. System nach einem der Ansprüche 8 bis 10, wobei der Prozessor ferner so konfiguriert ist, dass er das Deep-Learning-Modell mit benutzerspezifischen Bildern und vom Benutzer bereitgestellten Metrikwerten für die benutzerspezifischen Bilder neu trainiert.

## Revendications

1. Procédé de fourniture de cartes de saillance pour un modèle d'apprentissage profond (204), dans lequel le modèle d'apprentissage profond est un modèle de régression, le procédé comprenant :
la saisie d'une image d'entrée (202) dans le modèle d'apprentissage profond entraîné pour délivrer en sortie un score métrique (214), à partir d'une pluralité de scores métriques, pour l'image d'entrée ;
la génération d'une carte de saillance de soutien (208) pour l'image d'entrée, à partir du modèle d'apprentissage profond, correspondant à une première plage des scores métriques pour l'image, fournissant ainsi une ou plusieurs régions de soutien (106) de l'image indicatives de la première plage de scores métriques ; et
la génération d'une carte de saillance de distraction (212) pour l'image, à partir du modèle d'apprentissage profond, correspondant à une seconde plage différente des scores métriques pour l'image, fournissant ainsi une ou plusieurs régions de distraction (108) de l'image indicatives de la seconde plage de scores métriques,
dans lequel la carte de saillance de soutien est générée en appliquant des pondérations aux scores métriques de la première plage par rapport à leur distance depuis une valeur de soutien contenue dans la première plage, et la carte de saillance de distraction est générée en appliquant des pondérations aux scores métriques de la seconde plage par rapport à leur distance depuis une valeur de distraction contenue dans la seconde plage.

2. Procédé selon la revendication 1, dans lequel le score métrique est un score de qualité.

3. Procédé selon la revendication 1 ou 2, comprenant en outre le traitement séparé de l'image au niveau de la position des régions de soutien et/ou des régions de distraction.

4. Procédé selon l'une quelconque des revendications 1 à 3, comprenant en outre le passage d'un premier schéma de traitement d'image à un second schéma de traitement d'image, pour traiter l'image, en réponse au fait que le score métrique délivré en sortie par le modèle d'apprentissage profond tombe en dessous ou dépasse un seuil de score.

5. Procédé selon l'une quelconque des revendications 1 à 4, comprenant en outre le réentraînement du modèle d'apprentissage profond avec des images spécifiques à l'utilisateur et des scores métriques fournis par l'utilisateur pour les images spécifiques à l'utilisateur.

6. Procédé selon l'une quelconque des revendications 1 à 5, comprenant en outre l'affichage de la carte de saillance de soutien et de la carte de saillance de distraction superposées sur l'image.

7. Support de programme informatique comprenant un code de programme informatique qui, lorsqu'il est exécuté sur un système de traitement, amène le système de traitement à mettre en œuvre toutes les étapes du procédé selon l'une quelconque des revendications précédentes.

8. Système de fourniture de cartes de saillance pour un modèle d'apprentissage profond (204), dans lequel le modèle d'apprentissage profond est un modèle de régression, le système comprenant un processeur configuré pour :
saisir une image d'entrée (202) dans le modèle d'apprentissage profond entraîné pour délivrer en sortie un score métrique (214), à partir d'une pluralité de scores métriques, pour l'image d'entrée ;
générer une carte de saillance de soutien (208) pour l'image d'entrée, à partir du modèle d'apprentissage profond, correspondant à une première plage des scores métriques pour l'image, fournissant ainsi une ou plusieurs régions de soutien (106) de l'image indicatives de la première plage de scores métriques ; et
générer une carte de saillance de distraction (212) pour l'image, à partir du modèle d'apprentissage profond, correspondant à une seconde plage différente des scores métriques pour l'image, fournissant ainsi une ou plusieurs régions de distraction (108) de l'image indicatives de la seconde plage de scores métriques,
dans lequel le processeur est en outre configuré pour générer la carte de saillance de soutien en appliquant des pondérations aux scores métriques de la première plage par rapport à leur distance depuis une valeur de soutien contenue dans la première plage et pour générer la carte de saillance de distraction en appliquant des pondérations aux scores métriques de la seconde plage par rapport à leur distance depuis une valeur de distraction contenue dans la seconde plage.

9. Système selon la revendication 8, dans lequel le score métrique est un score de qualité.

10. Système selon la revendication 8 ou 9, dans lequel le processeur est en outre configuré pour traiter séparément l'image au niveau de la position des régions de soutien et/ou des régions de distraction.

11. Système selon l'une quelconque des revendications 8 à 10, dans lequel le processeur est en outre configuré pour réentraîner le modèle d'apprentissage profond avec des images spécifiques à l'utilisateur et des scores métriques fournis par l'utilisateur pour les images spécifiques à l'utilisateur.
